# EUROPÄISCHE PATENTSCHRIFT

(11) **EP 4 265 369 B1**
(45) Veröffentlichungstag und Bekanntmachung des Hinweises auf die Patenterteilung: **06.05.2026**
(21) Anmeldenummer: 22169346.8
(22) Anmeldetag: 21.04.2022
(51) Int. Cl.: B23K 26/38, B23K 26/08, B23K 26/36

(54) **VERFAHREN ZUR LASERBASIERTEN BEARBEITUNG EINES WERKSTÜCKS**
METHOD FOR LASER-BASED MACHINING OF A WORKPIECE
PROCÉDÉ D'USINAGE LASER D'UNE PIÈCE

(43) Veröffentlichungstag der Anmeldung: 25.10.2023
(73) Patentinhaber: Rollomatic S.A., 2525 Le Landeron (CH)
(72) Erfinder: Krumm, Christian, 2607 Cortébert (CH); Freidy, Mouhamadali, 1020 Renens (CH)
(74) Vertreter: Geitz Patentanwälte PartG mbB

(56) Entgegenhaltungen:
- DE-A1- 102018 125 436
- US-A1- 2011 095 005
- US-A1- 2014 263 212

## Beschreibung

Die Erfindung geht aus von einem Verfahren zur laserbasierten Bearbeitung eines Werkstücks.

Es ist bekannt, Werkstücke mittels kurzer intensiver Laserpulse zu bearbeiten. Die Laserstrahlung mit hoher Leistungsdichte führt zu einer Erhitzung des Materials an der Oberfläche des Werkstücks. Die Oberfläche des Werkstücks erreicht dabei lokal eine so hohe Temperatur, dass das Material des Werkstücks verdampft oder sublimiert. Bei hoher Leistungsdichte des Lasers entsteht ein Plasma aus Elektronen und Ionen des abgetragenen Materials. Der Materialabtrag wird auch als Laserablation oder Laserverdampfen bezeichnet. Das Material kann dabei beispielsweise flächig in Schichten abgetragen werden. Ferner besteht die Möglichkeit, ein Werkstück mittels kontinuierlicher oder gepulster Laserstrahlung zu durchtrennen. Dies wird als Laserschneiden oder Laserstrahlschneiden bezeichnet. Die Parameter der Laserstrahlung müssen an das zu bearbeitenden Material und die gewünschte Bearbeitung angepasst werden. Zu den Parametern der Laserstrahlung zählen die Wellenlänge und die mittlere Leistung. Ist die Laserstrahlung gepulst, gehören zu den Parametern ferner die Pulsenergie und Pulsdauer.

Laserstrahl und Werkstück werden für die Laserbearbeitung definiert relativ zueinander ausgerichtet und gegebenenfalls bewegt, um Material innerhalb vorgegebener Bereiche des Werkstücks gezielt abzutragen und bestimmte Konturen an der Oberfläche des Werkstücks auszubilden. Hierzu gehört unter anderem das Erzeugen von Schneiden oder sonstigen Kanten an Werkstücken.

Eine Laserbearbeitungsmaschine ist mit einem Laser ausgestattet, welcher einen Laserstrahl erzeugt. Der Laserstrahl erstreckt sich entlang einer Strahlachse.

Dabei entspricht die Strahlachse einer geometrischen Geraden. Der Laser umfasst einen Laserkopf, der den Laserstrahl mit seiner Strahlachse gezielt auf ein Werkstück richtet und diesen gegebenenfalls innerhalb einer vorgegebenen Kontur über die Oberfläche eines Werkstücks bewegt. Das Werkstück wird in einer Vorrichtung zur Ausrichtung und Positionierung angeordnet, welche bei einer Werkzeugmaschine auch als Aufspanneinrichtung bezeichnet wird. Diese Vorrichtung ist mit einer Vorrichtungsbasis, einer Werkstück-Fixiereinrichtung und einer Bewegungseinrichtung ausgestattet. Die Vorrichtungsbasis ist ortsfest angeordnet. Sie kann Teil der Maschinenbasis der Laserbearbeitungsmaschine sein. Die Werkstück-Fixiereinrichtung nimmt das Werkstück auf und spannt es fest ein, so dass sich die Position des Werkstücks relativ zur Werkstück-Fixiereinrichtung während der Bearbeitung des Werkstücks nicht verändert. Die Bewegungseinrichtung sorgt für eine Bewegung der Werkstück-Fixiereinrichtung relativ zur Vorrichtungsbasis. Da der Laserkopf der Laserbearbeitungsmaschine in Relation zu der Vorrichtungsbasis in der Regel ortsfest angeordnet ist, sorgt die Bewegungseinrichtung damit auch für eine Relativbewegung zwischen dem Laserkopf einerseits und der Werkstück-Fixiereinrichtung andererseits. Entsprechend wird dadurch ein an der Werkstück-Fixiereinrichtung eingespanntes Werkstück relativ zu einem von dem Laserkopf erzeugten Laserstrahl bewegt. Dank der durch die Bewegungseinrichtung ausgelösten Relativbewegung kann damit eine Bearbeitung eines Werkstücks an seiner gesamten Oberfläche erfolgen, soweit die Werkstückoberfläche nicht durch die Werkstück-Fixiereinrichtung abgedeckt ist. Bei der Bearbeitung wird das Werkstück mit seiner Oberfläche unter verschiedenen Winkeln gegen den Laserstrahl ausgerichtet. Der Laserkopf kann mit einer Ablenkeinrichtung ausgestattet sein, die den Laserstrahl mittels optischer Komponenten ablenkt und dabei mit hoher Geschwindigkeit über eine Oberfläche des Werkstücks führt. Die Ablenkeinrichtung sorgt damit für eine zusätzliche Relativbewegung von Laserstrahl und Werkstück.

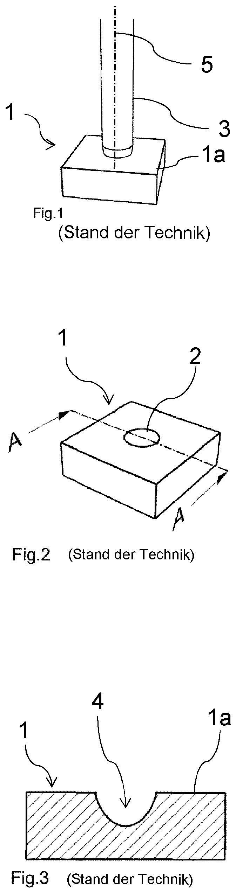

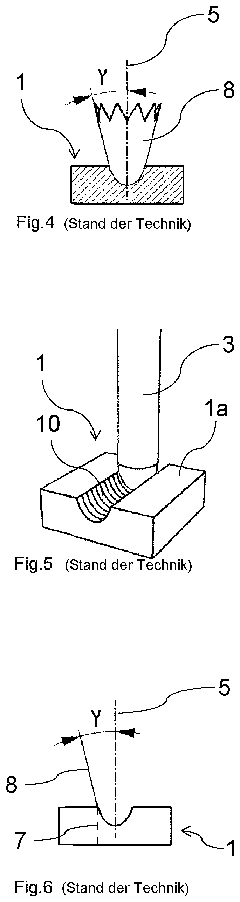

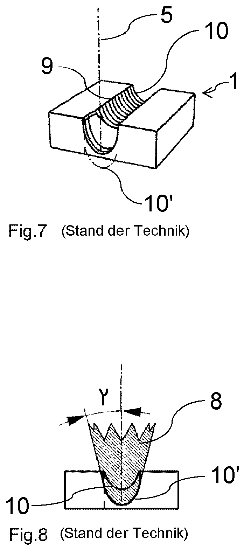

Zur Bearbeitung eines Werkstücks wird der Laserstrahl üblicherweise mit seiner Strahlachse derart zu einem zu bearbeitenden Werkstück ausgerichtet, dass die Strahlachse senkrecht zu einer Oberfläche des Werkstücks ausgerichtet ist. Dies ist in Figur 1 dargestellt. Figur 1 zeigt ein Werkstück 1 und einen Laserstrahl 3 mit einer Strahlachse 5. Die Figuren 2 und 3 zeigen die Auftreffstelle 2, an der der Laserstrahl 3 auf eine ebene Oberfläche 1a des Werkstücks 1 trifft. Die Energiedichte des Laserstrahls 3 ist in seinem Zentrum größer als am Rand des Laserstrahls 3. Entsprechend ist die Temperatur im Zentrum des Laserstrahls 3 höher als am Rand. Dies führt dazu, dass an der Auftreffstelle 2 im Zentrum mehr Material von dem Werkstück abgetragen wird als am Rand der Auftreffstelle 2. Wenn der Laserstrahl 3 nicht relativ zu dem Werkstück 1 bewegt wird, erzeugt der Laserstrahl 3 eine runde Vertiefung 4 in der Oberfläche des Werkstücks 1. Diese hat die Form eines Teils einer Kugelschale oder eines Ellipsoids. Die Vertiefung 4 ist in der Mitte tiefer als am Rand. Eine Wolke oder Flamme 8, welche sich unter Einwirkung des Laserstrahls 3 an der Oberfläche des Werkstücks 1 ausbildet, enthält das verdampfte oder sublimierte Material des Werkstücks sowie gegebenenfalls Staub und sonstige Partikel. Figur 4 zeigt, dass die Flamme 8 einen Öffnungswinkel γ aufweist. Wenn der Laserstrahl 3 relativ zu dem Werkstück entlang eines Pfads an der Oberfläche 1a des Werkstücks 1 beweget wird, entsteht eine Abfolge von räumlich versetzten Vertiefungen 4, die zusammen eine Furche 10 ergeben. Am Übergang zwischen der ebenen Oberfläche 1a und der Furche 10 entsteht eine Kante 9. Die Furche 10 hat dabei den Öffnungswinkel γ. Soll mit Hilfe des Laserstrahls 3 an dem Werkstück 1 eine Kante, beispielsweise eine Schneidkante erzeugt werden oder das Werkstück geschnitten werden, wird der Laserstrahl 3 mehrfach entlang des Pfads relativ zu dem Werkstück 1 hin- und/ oder herbewegt, bis die Furche 10 die notwendige Tiefe aufweist. Bei jeder Bewegung wird die mit dem Laserstrahl 3 erzeugte Furche 10 tiefer und breiter. Dies ist in den Figuren 7 und 8 dargestellt. Die beiden Figuren zeigen, dass die Furche 10 durch zusätzlichen Materialabtrag mit dem Laserstrahl in die Furche 10' übergeht. Figur 8 zeigt besonders deutlich, dass die Furche 10 aufgrund des Öffnungswinkels γ der Flamme 8 nicht nur tiefer sondern auch breiter wird. Mit jeder Bewegung des Laserstrahls 3 entlang des Pfads verschiebt sich die Kante 9, die am Rand der Flamme 8 an der Oberfläche 1a des Werkstücks 1 entsteht, zu den Seiten hin. Die Folge ist, dass sich die Kante 9 am Ende der Laserbearbeitung nicht zwingend an der vorgesehenen Position befindet.

Entsprechend wandert die Fläche 7. Ferner wird im Randbereich der Flamme 8 Staub und sublimiertes Material des Werkstücks 1 an der Oberfläche 1a abgeschieden. Dies sorgt für eine schlechte Oberflächenqualität des Werkstücks im Bereich der Kante 9.

Die US 2011/095005 A1 (offenbarend den Oberbegriff des Anspruchs 1) betrifft ein Verfahren und eine Vorrichtung zur Laserbearbeitung eines unfertigen Objekts. Dieses als Rohling bezeichnete Objekt soll zu einem Schneidwerkzeug mit einer Schneide und einer freien Oberfläche umgeformt werden. Es ist ein Laser vorgesehen, der Laserstrahlim-pulse erzeugt, die über eine Umlenkanordnung auf eine Oberfläche des Rohlings gerichtet werden. Ein Laserstrahlimpuls erreicht an einer Auftreffstelle die Oberfläche des Rohlings unter einem Neigungswinkel zwischen der Laserstrahlrichtung (R) des Laserstrahlimpulses und der zu bildenden Oberfläche des Rohlings. Die Umlenkanordnung wird so gesteuert, dass die Laserstrahlimpulse an benachbarten Auftrefforten auftreffen und eine Pulszone bilden. Mit der Positionierungsanordnung wird eine Relativbewegung zwischen der Pulszone und dem Rohling mit vorgegebener Geschwindigkeit erzeugt, so dass sich die durch die Auftreffstellen gebildete Pulszone entlang der Oberfläche des Rohlings bewegt wird. Bei jedem Konturdurchgang wird eine Ablationsschicht mit einer Schichtdicke (dS) von dem Rohling entfernt.

Die DE 10 2018 125 436 A1 offenbart ein Verfahren zum materialabtragenden Bearbeiten eines Werkstücks durch Laserstrahlimpulse (P). Die Laserstrahlimpulse (P) werden auf Auftreffstellen auf die Oberfläche eines abzutragenden Volumens (V) des Werkstücks gerichtet, um Material von dem Werkstück zu entfernen. Durch das Entfernen des Volumens (V) entsteht am Werkstück eine neue, herzustellende Konturfläche. Ein Auftreffwinkel (α) der Laserstrahlimpulse (P) relativ zu der herzustellenden Konturfläche wird während des Abtragens zumindest des Teils des abzutragenden Volumens (V), der unmittelbar an die herzustellende Konturfläche angrenzt, gemäß einer vorgegebenen Bedingung eingestellt. Gemäß dieser Bedingung ist der Auftreffwinkel gleich groß wie ein Schwellenwinkel (α) oder etwas kleiner. Der Schwellenwinkel (α) entspricht dem Auftreffwinkel, an dem eine effektive Laserenergiedichte (E) an der Auftreffstelle der Laserstrahlimpulse (P) an der herzustellenden Konturfläche gleich groß ist wie eine Schwellenfluenz (F). Ein Materialabtrag findet an einer Auftreffstelle nur dann statt, wenn die effektive Laserenergiedichte (E) größer ist als die Schwellenfluenz (F). Dadurch soll erreicht werden, dass nur solche Volumenelemente des abzutragenden Volumens (V) entfernt werden, die sich an die gewünschte herzustellende Konturfläche anschließen.

Der Erfindung liegt die Aufgabe zugrunde, ein Verfahren zur laserbasierten Bearbeitung eines Werkstücks zur Verfügung zu stellen, mit dem eine Werkstück-Oberfläche an einer exakt vorgegebenen Position erzeugt werden kann und bei dem die erzeugte Werkstück-Oberfläche eine hohe Oberflächenqualität aufweist.

Diese Aufgabe wird durch ein Verfahren gemäß Anspruch 1 gelöst. Das erfindungsgemäße Verfahren zeichnet sich dadurch aus, dass das Werkstück und der Laserstrahl derart relativ zueinander ausgerichtet werden, dass die geometrische Strahlachse des Laserstrahls während der Bearbeitung jeweils in dem Punkt, in dem die Strahlachse die zu erzeugende Werkstück-Oberfläche schneidet, mit einer Tangente an die zu erzeugende Werkstück-Oberfläche in diesem Punkt einen Winkel α zwischen 1° und 10° einschließt. Dies führt dazu, dass die sich an der Oberfläche des Werkstücks unter Einwirkung des Laserstrahls ausbildende Wolke oder Flamme mit ihrem Öffnungswinkel ebenfalls gegenüber der Oberfläche des Werkstücks geneigt ist. Der Winkel α entspricht dem Öffnungswinkel γ der Flamme. Durch die Ausrichtung der Strahlachse des Laserstrahls unter dem Winkel α gegen die Tangente an die zu erzeugende Werkstück-Oberfläche wird verhindert, dass an der zu erzeugenden Werkstück-Oberfläche verdampftes oder sublimiertes Material abgeschieden wird und dass diese Oberfläche des Werkstücks in unerwünschter Weise verbrannt wird. Die Oberflächen, welche zu der erzeugten Kante benachbart sind, weisen entsprechend nach der Laserbearbeitung eine gute Oberflächenqualität auf.

Ein weiterer Vorteil des erfindungsgemäßen Verfahrens besteht darin, dass die zu erzeugende Werkstück-Oberfläche exakt an der vorgegebenen Position mit der exakt vorgegebenen Geometrie durch gezielten Materialabtrag mittels des Lasers geschaffen wird. Im Unterschied zu bekannten Verfahren verschiebt sich die durch Materialabtrag erzeugte Werkstück-Oberfläche nicht während der Laserbearbeitung.

Das Material wird bei der Laserbearbeitung nicht schichtweise abgetragen, da der Laser nicht senkrecht zu der zu erzeugenden Werkstück-Oberfläche ausgerichtet ist. Stattdessen wird zur Erzeugung der Werkstück-Oberfläche ein Abschnitt des Werkstücks abgetrennt.

Nach einer vorteilhaften Ausgestaltung der Erfindung werden der Laserstrahl und das Werkstück bei der laserbasierten Bearbeitung derart relativ zueinander bewegt, dass ein Abschnitt des Werkstücks abgetragen wird. Bei dem Materialabtrag entsteht die zu erzeugende Werkstück-Oberfläche an der Grenzfläche zu dem abgetragenen Abschnitt des Werkstücks. Wenn der abzutragende Abschnitt eine geringe Dicke aufweist, verdampft das abgetragene Material des Werkstücks vollständig. Der Materialabtrag erfolgt entlang eines vorgegebenen Pfads unter Beibehaltung der Ausrichtung der Strahlachse relativ zu der jeweiligen Tangente an die zu erzeugenden Werkstück-Oberfläche unter dem Winkel α. Auf diese Weise kann das Werkstück geschnitten werden oder es kann eine Kante erzeugt werden. Hierzu wird der Laserstrahl mehrfach entlang des Pfads geführt, bis die gewünschte Werkstück-Oberfläche vollständig erzeugt ist.

Nach einer weiteren vorteilhaften Ausgestaltung der Erfindung wird der Winkel α in Abhängigkeit von dem Material des Werkstücks, der Wellenlänge des Lasers und der mittleren Leistung des Lasers bestimmt. Die genannten Parameter bestimmen den Öffnungswinkel γ der Flamme, die sich an der Oberfläche des Werkstücks unter der Einwirkung des Laserstrahls ausbildet.

Nach einer weiteren vorteilhaften Ausgestaltung der Erfindung ist der Laser ein gepulster Laser. Mit einem gepulsten Laser kann innerhalb der kurzen Pulsdauer eine besonders hohe Energiedichte erreicht und damit eine besonders hohe Oberflächentemperatur an dem Werkstück erzeugt werden. Die Temperatur breitet sich aufgrund von Wärmeleitung innerhalb der kurzen Pulsdauer innerhalb des Werkstücks nicht wesentlich aus, da der Energietransport bei der Wärmeleitung im Vergleich zur Pulsdauer sehr langsam ist. Infolgedessen konzentriert sich die Energie, die der Laserstrahl auf das Werkstück überträgt, auf eine sehr dünne Schicht. Daher erreicht die Oberfläche des Werkstücks bei Verwendung eines gepulsten Lasers räumlich begrenzt eine besonders hohe Temperatur und es kommt zum schlagartigen Verdampfen des Materials.

Nach einer weiteren vorteilhaften Ausgestaltung der Erfindung wird der Winkel α bei Verwendung eines gepulsten Lasers nicht nur in Abhängigkeit von dem Material des Werkstücks, der Wellenlänge des Lasers und der mittleren Leistung des Lasers bestimmt, sondern zusätzlich in Abhängigkeit von der Pulsdauer und von der Pulsenergie des gepulsten Lasers.

An der Oberfläche des Werkstücks wird entsprechend der Erfindung eine Flamme erzeugt, welche sublimiertes Material des Werkstücks enthält, wobei die Flamme einen von dem Material des Werkstücks und von dem Laserstrahl abhängigen Öffnungswinkel γ aufweist. Der Winkel α zwischen der Strahlachse des Laserstrahls und einer Tangente an die zu erzeugende Oberfläche des Werkstücks wird so eingestellt, dass er dem Winkel γ entspricht. Dadurch kann eine Werkstück-Oberfläche mit besonders guter Qualität erzeugt werden.

Nach einer weiteren vorteilhaften Ausgestaltung der Erfindung wird der Laserstrahl auf das Werkstück fokussiert, wobei der Brennpunkt des fokussierten Laserstrahls jeweils in dem Punkt liegt, in dem die Strahlachse die zu erzeugende Werkstück-Oberfläche schneidet.

Nach einer weiteren vorteilhaften Ausgestaltung der Erfindung ist die zu erzeugende Werkstück-Oberfläche eine ebene Oberfläche.

Nach einer weiteren vorteilhaften Ausgestaltung der Erfindung ist die zu erzeugende Werkstück-Oberfläche eine gekrümmte Oberfläche. Die Bewegungseinrichtung dreht das in der Werkstück-Fixiereinrichtung aufgenommene Werkstück um eine Werkstück-Rotationsachse während des laserbasierten Materialabtrags.

Nach einer weiteren vorteilhaften Ausgestaltung der Erfindung erfolgt das Abtragen von Material an dem Werkstück unter der Ausrichtung des Laserstrahls relativ zu dem Werkstück mit einem konstanten Winkel α. Die Ausrichtung des Laserstrahls relativ zum Werkstück bleibt daher während des gesamten Materialabtrags erhalten. Dies eignet sich beispielsweise bei der Erzeugung von ebenen Oberflächen und wenn das Werkstück eine bestimmte Symmetrie bezogen auf die Bewegungsachsen der Bewegungseinrichtung der Laserbearbeitungsvorrichtung aufweist.

Nach einer weiteren vorteilhaften Ausgestaltung der Erfindung wird der Winkel α beim Abtragen von Material an dem Werkstück innerhalb des Winkelbereichs 1° ≤ α ≤ 10° verändert. Die Ausrichtung des Laserstrahls relativ zu dem Werkstück ändert sich damit, wobei der Winkel α in dem vorgegebenen Winkelbereich bleibt. Eine derartige Winkeländerung kann erfolgen, wenn der Laserstrahl beim Materialabtrag zusätzlich in geschlossenen oder offenen Kurven entlang eines Laserpfads geführt wird, wenn unregelmäßig geformte oder nicht ebene Oberfläche erzeugt werden oder wenn das Werkstück in einer besonderen Ausrichtung relativ zu den Bewegungsachsen der Bewegungseinrichtung der Laserbearbeitungsvorrichtung angeordnet ist. Von besonderer Bedeutung ist dabei eine Werkstück-Rotationsachse, um welche die Werkstück-Fixiereinrichtung rotiert und damit auch das in der Werkstück-Fixiereinrichtung angeordnete Werkstück.

Nach einer weiteren vorteilhaften Ausgestaltung der Erfindung wird der Laserstrahl relativ zu der Oberfläche des Werkstücks bewegt, wobei der Winkel α zwischen der Strahlachse und der Tangente an die zu erzeugende Werkstück-Oberfläche während der Relativ-Bewegung innerhalb des Winkelbereichs 1°≤ α ≤ 10° liegt. Die Relativ-Bewegung stellt dabei eine Überlagerung aus einer ersten Bewegung und einer zweiten Bewegung dar. Die erste Bewegung sorgt für eine Bewegung des Laserstrahls zwischen einem ersten Punkt A an der Oberfläche des Werkstücks und einem zweiten Punkt B an der Oberfläche des Werkstücks. Bei der zweiten Bewegung wird der Laserstrahl innerhalb einer geschlossenen oder offenen Kurve bewegt, wobei die Ausdehnung der Kurve klein ist gegenüber dem Weg, den der Laserstrahl von Punkt A nach Punkt B zurücklegt. Durch die zusätzliche schleifenförmige zweite Bewegung wird der Bereich des Materialabtrags während der ersten Bewegung vergrößert.

Weitere Vorteile und vorteilhafte Ausgestaltungen der Erfindung können der nachfolgenden Beschreibung, der Zeichnung und den Ansprüchen entnommen werden.

### Zeichnung

In der Zeichnung sind ein bekanntes Verfahren zur laserbasierten Bearbeitung eines Werkstücks und ein erfindungsgemäßes Verfahren zur laserbasierten Bearbeitung dargestellt. Es zeigen:
- Figur 1: perspektivische Darstellung eines Werkstücks mit einem Laserstrahl bei einem bekannten Verfahren zur Laserbearbeitung,
- Figur 2: Werkstück gemäß Figur 1 in einer anderen perspektivischen Darstellung,
- Figur 3: Werkstück gemäß Figur 1 und 2 im Längsschnitt entlang der in Figur 2 mit A - A gekennzeichneten Ebene,
- Figur 4: Werkstück in Schnittdarstellung gemäß Figur 3 mit einer Flamme, welche sublimiertes Material enthält,
- Figur 5: Werkstück gemäß Figuren 1 bis 4, wobei mit dem Laserstrahl eine Vertiefung entlang einem Pfad erzeugt wurde,
- Figur 6: Werkstück gemäß Figur 5 in einer Ansicht von vorne,
- Figur 7: Werkstück in perspektivischer Darstellung, wobei der Laserstrahl mehrfach entlang des Pfads bewegt wurde,
- Figur 8: Werkstück gemäß Figur 7 in einer Ansicht von vorne,
- Figur 9: Werkstück mit erfindungsgemäß ausgerichtetem Laserstrahl,
- Figur 10: Werkstück im Längsschnitt bei einer laserbasierten Bearbeitung gemäß Figur 9,
- Figur 11: zweites Werkstück, an dem mittels des erfindungsgemäßen Verfahrens eine ebene Werkstück-Oberfläche erzeugt wird,
- Figur 12: Werkstück gemäß Figur 11 mit teilweise abgetragenem Material,
- Figur 13: Werkstück gemäß Figur 11, wobei das Material vollständig abgetragen ist,
- Figur 14: drittes Werkstück, an dem mittels des erfindungsgemäßen Verfahrens eine ebene Werkstück-Oberfläche erzeugt wird,
- Figur 15: Werkstück gemäß Figur 14 mit teilweise abgetragenem Material,
- Figur 16: Werkstück gemäß Figur 14, wobei das Material vollständig abgetragen ist,
- Figur 17: viertes Werkstück, an dem mittels des erfindungsgemäßen Verfahrens eine gekrümmte Werkstück-Oberfläche erzeugt wird,
- Figur 18: Werkstück gemäß Figur 17 mit teilweise abgetragenem Material,
- Figur 19: Werkstück gemäß Figur 17, wobei das Material vollständig abgetragen ist,
- Figur 20: fünftes Werkstück, an dem mittels des erfindungsgemäßen Verfahrens eine gekrümmte Werkstück-Oberfläche erzeugt wird, wobei das Werkstück in einer Ansicht von vorne zu Beginn der Laserbearbeitung dargestellt ist,
- Figur 21: Werkstück gemäß Figur 20 in perspektivischer Ansicht,
- Figur 22: Werkstück gemäß Figur 20 zu einem ersten späteren Zeitpunkt der Laserbearbeitung,
- Figur 23: Werkstück gemäß Figur 22 in perspektivischer Ansicht,
- Figur 24: Werkstück gemäß Figur 20 zu einem zweiten späteren Zeitpunkt der Laserbearbeitung,
- Figur 25: Werkstück gemäß Figur 24 in perspektivischer Ansicht,
- Figur 26: Werkstück gemäß Figur 20 zu einem dritten späteren Zeitpunkt der Laserbearbeitung,
- Figur 27: Werkstück gemäß Figur 26 in perspektivischer Ansicht,
- Figur 28: Laserbearbeitungsmaschine zur Durchführung des Verfahrens.

### Beschreibung der Ausführungsbeispiele

In den Figuren 1 bis 8 ist ein bekanntes Verfahren zur laserbasierten Bearbeitung eines Werkstücks dargestellt, bei dem der Laserstrahl 3 mit seiner Strahlachse 5 senkrecht zu der ebenen Oberfläche 1a des Werkstücks 1 ausgerichtet ist. Dieses bekannte Verfahren ist in der obigen Beschreibungseinleitung erläutert.

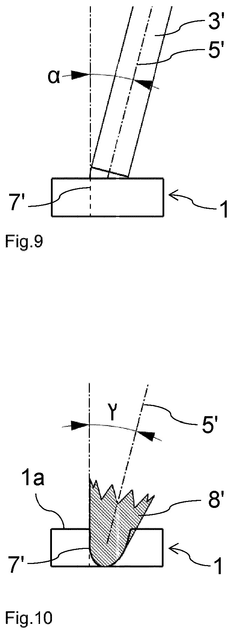

In den Figuren 9 und 10 ist das erfindungsgemäße Verfahren dargestellt. Die zu erzeugende Werkstück-Oberfläche 7' ist eine ebene Fläche. Daher verläuft die die Tangente an diese zu erzeugende Werkstück-Oberfläche in der Oberfläche. Im vorliegenden Ausführungsbeispiel verläuft die zu erzeugende Werkstück-Oberfläche 7' senkrecht zu der Oberfläche 1a des Werkstücks. Im Unterschied zu dem bekannten Verfahren gemäß Figuren 1 bis 8 wird bei dem erfindungsgemäßen Verfahren gemäß Figuren 9 und 10 der Laserstrahl 3' mit seiner Strahlachse 5' nicht parallel zu der zu erzeugenden Oberfläche 7' und unter 90° gegen die ebene Oberfläche 1a des Werkstücks 1 ausgerichtet, sondern unter einem Winkel α, gegen die zu erzeugende ebene Werkstück-Oberfläche 7'. Figur 10 zeigt die Wolke oder Flamme 8', die der Laserstrahl 3' beim Auftreffen auf das Werkstück 1 erzeugt und die sublimiertes Material des Werkstücks 1 enthält. Die Flamme 8' hat einen Öffnungswinkel γ. Dabei entspricht der Winkel γ nicht dem vollständigen Öffnungswinkel der kegelförmigen Flamme sondern nur dem Öffnungswinkel der kegelförmigen Flamme bezogen auf die Strahlachse 5'. Der Laserstrahl wird mit seiner Strahlachse 5' derart ausgerichtet, dass der Winkel α dem Winkel γ entspricht. Auf diese Weise wird erreicht, dass die linke Flanke der Flamme 8' gemäß Darstellung in Figur 10 parallel zu der zu erzeugenden Werkstück-Oberfläche 7' ist. Dies führt dazu, dass mit dem Laserstrahl 3' exakt die Fläche 7' erzeugt werden kann, wobei sich die Kante zwischen der Fläche 7' und der Oberfläche 1a während der Laserbearbeitung nicht verschiebt.

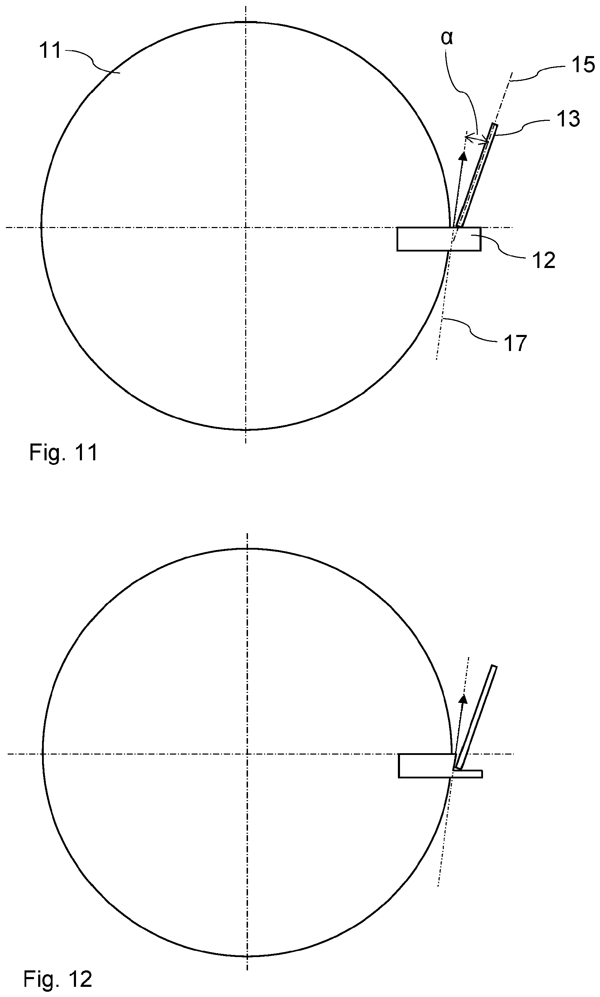

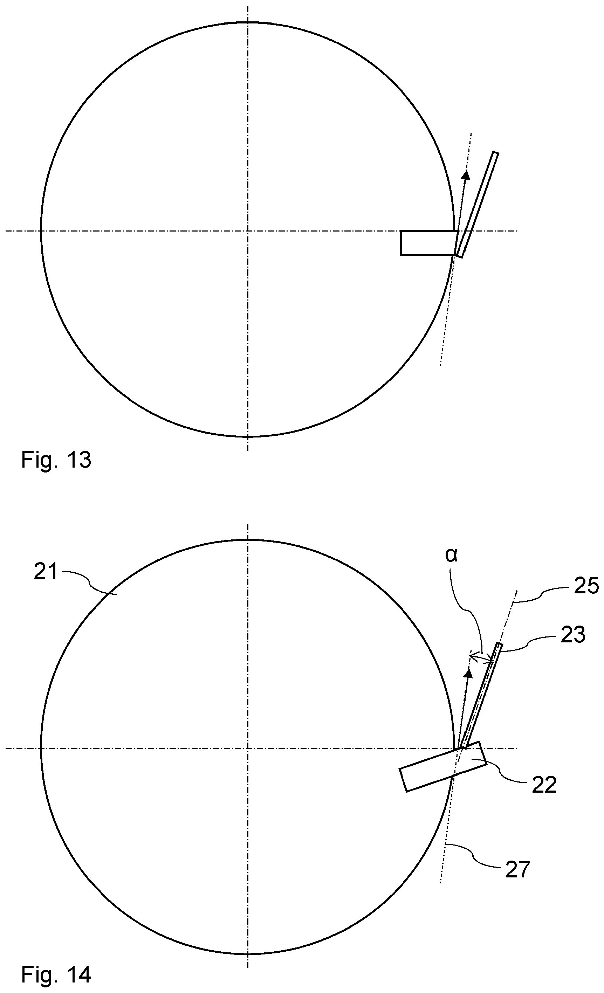

In den Figuren 11 bis 13 ist ein zweites Werkstück 11 dargestellt, an dem mit dem erfindungsgemäßen Verfahren eine vorgegebene Werkstück-Oberfläche 17 erzeugt wird. Das Werkstück 11 ist zylindrisch mit kreisrundem Querschnitt. Es ist in den Figuren 11 bis 13 im Querschnitt dargestellt. Das Werkstück 11 weist einen Einsatz 12 auf, an dem eine vorgegebene ebene Werkstück-Oberfläche mit dem Laserstrahl 13 mit Strahlachse 15 durch Materialabtrag erzeugt wird. Hierzu wird ein Teil des Einsatzes 12 entfernt. Der Laserstrahl 13 wird mit seiner Strahlachse 15 derart zu dem Werkstück 11 ausgerichtet, dass die Strahlachse 15 mit der Tangente 17 an die zu erzeugende Werkstück-Oberfläche den Winkel α einschließt. Figur 12 zeigt das Werkstück 11, nachdem mittels des Laserstrahls 13 ein Teil des Einsatzes 12 entfernt wurde. Figur 13 zeigt das Werkstück am Ende der Laserbearbeitung. Die zu erzeugenden Werkstück-Oberfläche ist eine ebene Oberfläche. Die Tangente 17 verläuft daher in der Ebene, die durch diese Oberfläche gebildet wird. Die Figuren 11 bis 13 zeigen, dass der Winkel α während der gesamten Laserbearbeitung konstant bleibt. Auf diese Weise kann beispielsweise eine Freifläche an einem Schneidwerkzeug erzeugt werden.

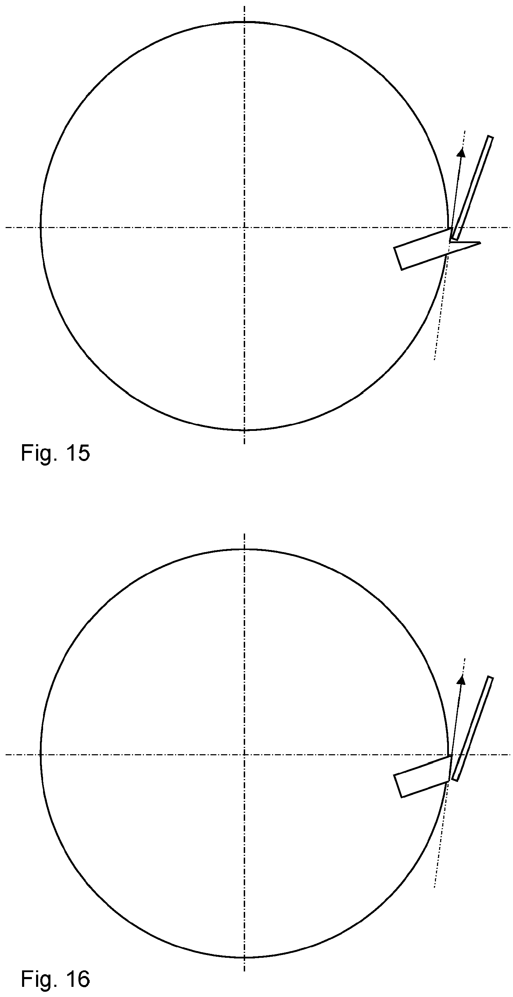

In den Figuren 14 bis 16 ist ein drittes Werkstück 21 mit einem Einsatz 22 dargestellt, an dem mit dem erfindungsgemäßen Verfahren eine vorgegebene ebene Werkstück-Oberfläche erzeugt wird. Da die zu erzeugende Werkstück-Oberfläche eine ebene Oberfläche ist, verläuft die Tangente 27 an die zu erzeugende Werkstück-Oberfläche in der Werkstück-Oberfläche. Der Laserstrahl 23 wird mit seiner Strahlachse 25 unter einem Winkel α gegen die Tangente 27 an die zu erzeugende Werkstück-Oberfläche ausgerichtet. In Überstimmung mit dem zweiten Werkstück 11 ist das dritte Werkstück 21 zylindrisch mit kreisrundem Querschnitt. Der Unterschied zu dem zweiten Werkstück 11 besteht darin, dass der Einsatz 22 des dritten Werkstücks 21 mit einer anderen Ausrichtung in das Werkstück eingesetzt ist.

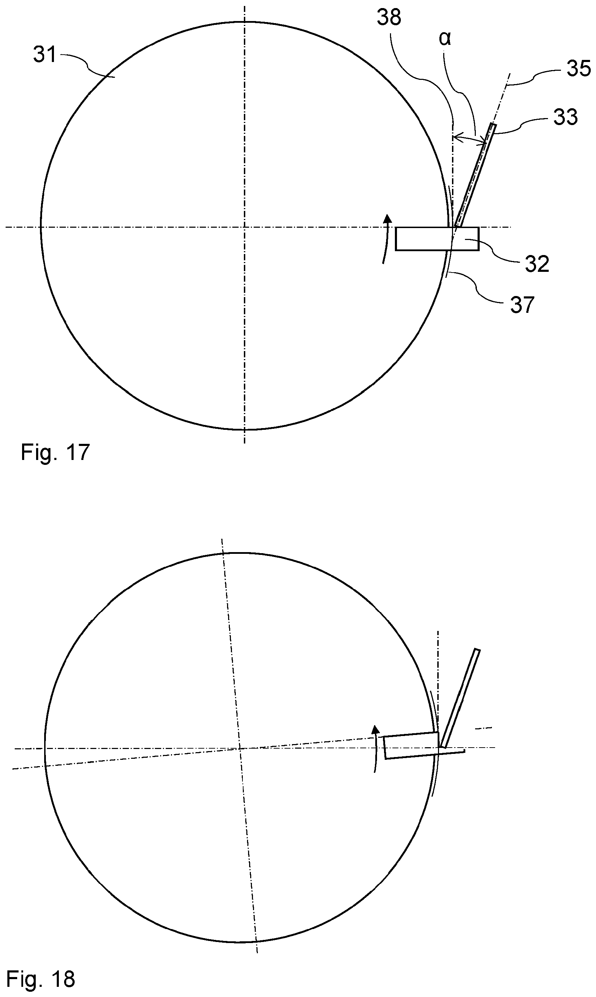

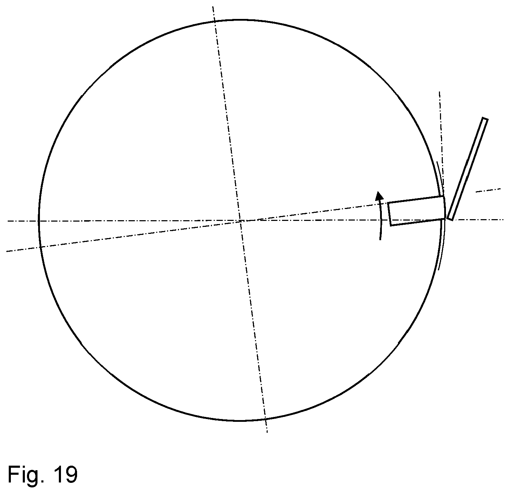

In den Figuren 17 bis 19 ist ein viertes Werkstück 31 mit einem Einsatz 32 dargestellt, an dem eine gekrümmte Werkstück-Oberfläche erzeugt wird, deren Verlauf 37 in Figur 17 durch eine Kurve angedeutet ist. Hierzu wird das Werkstück 31 während der Laserbearbeitung um eine Werkstück-Längsachse gedreht. Dabei ist der Laserstrahl 33 mit seiner Strahlachse 35 stets unter dem Winkel α gegen die Tangente 38 an die gekrümmte Oberfläche ausgerichtet. Der Winkel α bleibt bei dem Materialabtrag konstant. Auf diese Weise kann beispielsweise eine Führungsphase an einem Schneidwerkzeug erzeugt werden.

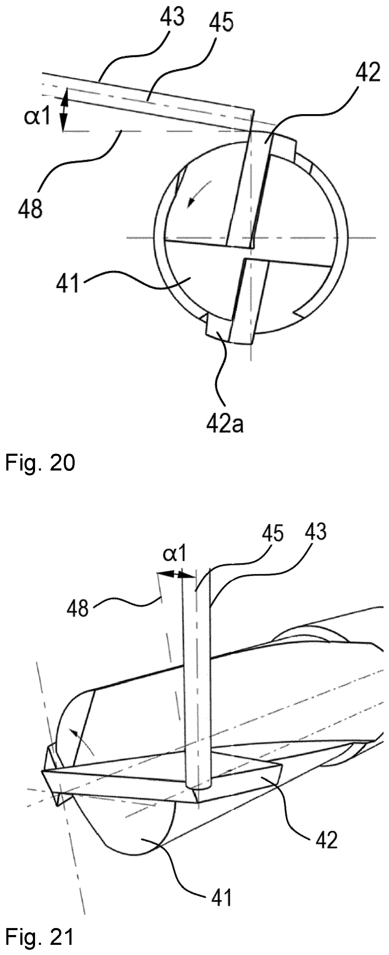

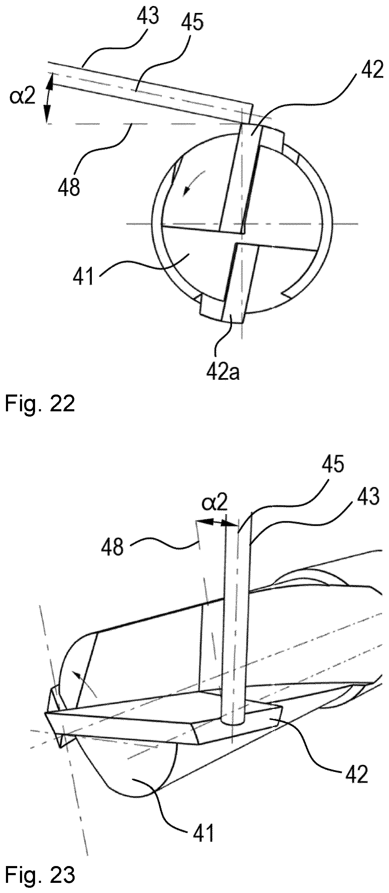

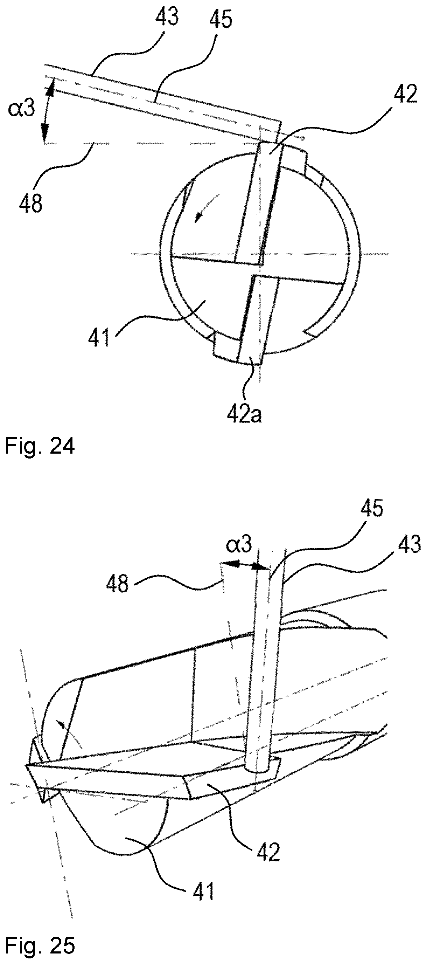

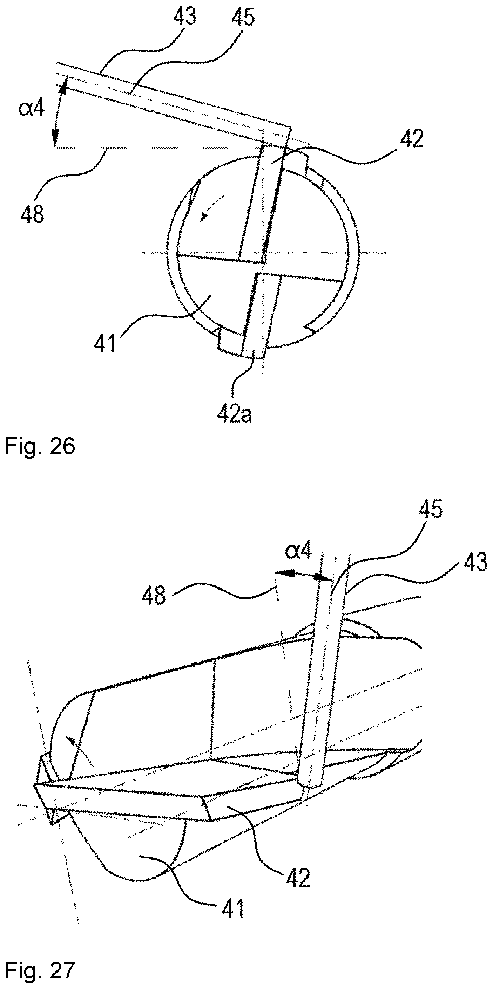

In den Figuren 20 bis 27 ist ein fünftes Werkstück 41 mit zwei Einsätzen 42, 42a dargestellt, an denen eine gekrümmte Werkstück-Oberfläche erzeugt wird. Dabei schließt die Strahlachse 45 des Laserstrahls 43 jeweils in dem Punkt, in dem der Laserstrahl auf die Oberfläche des Werkstücks 41 trifft und die Strahlachse 45 die Werkstückoberfläche schneidet, mit der Tangente 48 an diesem Punkt einen Winkel α ein. Die Einsätze 42, 42a weisen die Besonderheit auf, dass sie nicht parallel zur Längsachse des Werkstücks 41 ausgerichtet sind. Das Werkstück 41 wird daher bei der Laserbearbeitung mit dem Laserstrahl 43 um seine Längsachse gedreht. Dabei ist eine Rotation zum einen notwendig, um die gekrümmte Werkstückoberfläche in einer Ebene senkrecht zur Längsachse des Werkstücks 41 zu erzeugen und zum anderen um die Werkstückoberfläche der Einsätze 42, 42a in axialer Richtung des Werkstücks 41 zu erzeugen. Die Figuren 20 und 21 zeigen das Werkstück 41 zu Beginn der Laserbearbeitung in zwei verschiedenen Ansichten. Dabei ist der Laserstrahl 43 mit seiner Strahlachse 45 unter dem Winkel α1 gegen die Tangente 48 an die Oberfläche des Einsatzes 42 des Werkstücks 41 gerichtet. Die Figuren 22 und 23 zeigen das Werkstück 41 zu einem fortgeschrittenen Zeitpunkt der Laserbearbeitung. In Figur 23 ist erkennbar, dass der Laserstrahl 43 mit seiner Strahlachse 35 entlang des Einsatzes 42 des Werkstücks 41 bewegt wurde. Die Strahlachse 45 des Laserstrahls 43 schließt mit der Tangente 48 an die Werkstückoberfläche einen Winkel α2 ein, der von α1 verschieden ist. Die Figuren 24 und 25 zeigen das Werkstück 41 zu einem noch späteren Zeitpunkt der Laserbearbeitung. Der Laserstrahl 43 hat sich weiter an der Oberfläche des Einsatzes 42 des Werkstücks 41 entlang bewegt. Die Strahlachse 45 des Laserstrahls 43 schließt mit der Tangente 48 an die Werkstückoberfläche einen Winkel α3 ein. Die Figuren 26 und 27 zeigen das Werkstück kurz vor dem Beenden der Laserbearbeitung des Einsatzes 42 des Werkstücks 41. Zu diesem Zeitpunkt befindet sich der Laserstrahl 43 am unteren Ende des Einsatzes 42. Die Strahlachse 45 des Laserstrahls 43 schließt mit der Tangente 48 einen Winkel α4 ein. Dabei sind die Winkel α1, α2, α3 und α4 verschieden, jedoch liegen alle Winkel in dem Bereich zwischen 1° und 10°. Im vorliegenden Fall gilt α1 < α2 < α3 < α4. Die Figuren 20 bis 27 zeigen, dass sich der Winkel zwischen der Strahlachse 45 des Laserstrahls 43 und der Tangente 48 an die Werkstückoberfläche 41 in dem Punkt, in dem eine Laserbearbeitung erfolgt, ändern kann, wobei der Winkel stets in dem Winkelbereich zwischen 1° und 10° liegt.

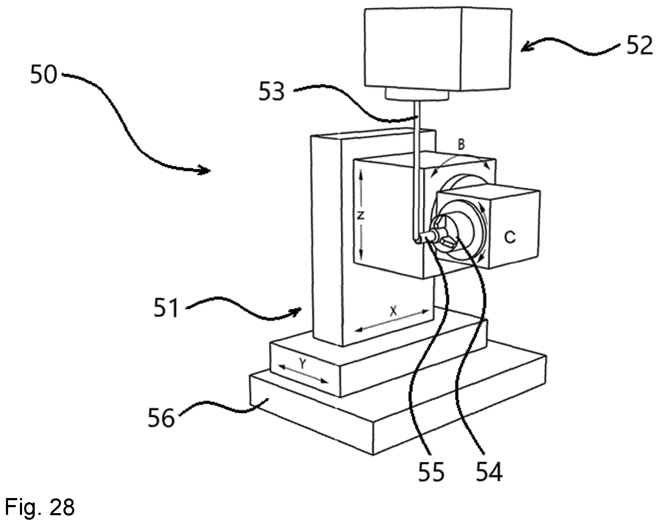

In Figur 28 ist eine Laserbearbeitungsvorrichtung 50 zur Durchführung des Verfahrens dargestellt. Die Laserbearbeitungsvorrichtung 50 umfasst eine Werkstück-Fixiereinrichtung 54, welche ein Werkstück 55 aufnimmt und fixiert, eine Bewegungseinrichtung 51, welche das in der Fixiereinrichtung angeordnete Werkstück 55 relativ zu einer Vorrichtungsbasis 56 bewegt, und einen Laser 52, der einen Laserstrahl 53 erzeugt und diesen mit einer Laserscanning-Einrichtung bewegt. Die Bewegungseinrichtung 51 weist im vorliegenden Fall drei lineare Achse X, Y, Z und zwei Rotationsachsen B und C auf.

### Bezugszahlen

- 1: Werkstück
- 1a: ebene Oberfläche des Werkstücks
- 2: Auftreffstelle des Laserstrahls
- 3, 3': Laserstrahl
- 4, 4': Vertiefung
- 5, 5': Strahlachse
- 7, 7': erzeugte Werkstück-Oberfläche
- 8, 8': Flamme
- 9: Kante
- 10, 10': Furche
- 11: zweites Werkstück
- 12: Einsatz
- 13: Laserstrahl
- 15: Strahlachse
- 17: Tangente an die Werkstück-Oberfläche
- 21: zweites Werkstück
- 22: Einsatz
- 23: Laserstrahl
- 25: Strahlachse
- 27: Tangente an die Werkstück-Oberfläche
- 31: zweites Werkstück
- 32: Einsatz
- 33: Laserstrahl
- 35: Strahlachse
- 37: Verlauf der Werkstück-Oberfläche
- 38: Tangente
- 41: fünftes Werkstück
- 42: Einsatz
- 42a: Einsatz
- 43: Laserstrahl
- 45: Strahlachse
- 48: Tangente
- 50: Laserbearbeitungsvorrichtung
- 51: Bewegungseinrichtung
- 52: Laser
- 53: Laserstrahl
- 54: Werkstück-Fixiereinrichtung
- 55: Werkstück
- 56: Vorrichtungsbasis

## Patentansprüche

1. Verfahren zur laserbasierten Bearbeitung eines Werkstücks, wobei durch Materialabtrag mittels eines Lasers (52) eine definierte Werkstück-Oberfläche (7', 37) an dem Werkstück (1, 11, 21, 31, 41, 55) erzeugt wird, unter Verwendung einer Laserbearbeitungsvorrichtung (50), welche eine das Werkstück (1, 11, 21,31, 41, 55) aufnehmende und fixierende Werkstück-Fixiereinrichtung (54), eine Bewegungseinrichtung (51), welche die Werkstück-Fixiereinrichtung (54) relativ zu einer Vorrichtungsbasis (56) bewegt und den Laser (52) aufweist, dessen Laserstrahl (3', 13, 23, 33, 43, 53) mit seiner geometrischen Strahlachse (5', 15, 25, 35, 45) auf das in der Werkstück-Fixiereinrichtung (54) aufgenommene Werkstück (1, 11, 21, 31, 41, 55) gerichtet ist, wobei die Laserbearbeitungsvorrichtung (50) ausgebildet ist, das in der Werkstück-Fixiereinrichtung (54) angeordnete Werkstück (1, 11, 21, 31, 41, 55) relativ zu dem Laserstrahl (3', 13, 23, 33, 43, 53) auszurichten und den Laserstrahl (3', 13, 23, 33, 43, 53) relativ zu dem Werkstück (1, 11, 21, 31, 41, 55) zu bewegen, **gekennzeichnet durch** folgende Verfahrensschritte:
Ausrichten des Werkstücks (1, 11, 21, 31, 41, 55) und des Laserstrahls (3', 13, 23, 33, 43, 53) des Lasers (52) relativ zueinander, derart dass die Strahlachse (5', 15, 25, 35, 45) des Laserstrahls (3', 13, 23, 33, 43, 53) während der Bearbeitung jeweils in dem Punkt, in dem die Strahlachse (5', 15, 25, 35, 45) die zu erzeugende Werkstück-Oberfläche (7', 37) schneidet, mit einer Tangente (17, 27, 38, 48) an die zu erzeugende Werkstück-Oberfläche (7', 37) in diesem Punkt einen Winkel α zwischen 1° und 10° einschließt, und
Abtragen von Material an dem Werkstück (1, 11, 21, 31, 41, 55) mit der Ausrichtung des Laserstrahls (3', 13, 23, 33, 43, 53) relativ zu dem Werkstück (1, 11, 21, 31, 41, 55) unter dem Winkel α, wobei 1° ≤ α ≤ 10°,
wobei beim Auftreffen des Laserstrahls (3', 13, 23, 33, 43, 53) auf das Werkstück (1, 11, 21, 31, 41, 55) eine Flamme (8') erzeugt wird, welche durch die Einwirkung des Laserstrahls (3', 13, 23, 33, 43, 53) sublimiertes Material des Werkstücks (1, 11, 21, 31, 41, 55) enthält, wobei die Flamme (8') einen von dem Material des Werkstücks (1, 11, 21, 31, 41, 55) und von dem Laserstrahl (3', 13, 23, 33, 43, 53) abhängigen Öffnungswinkel γ aufweist, und dass der Winkel α so eingestellt wird, dass er so groß ist wie der Öffnungswinkel γ.

2. Verfahren nach Anspruch 1, **dadurch gekennzeichnet, dass** der Laserstrahl (3', 13, 23, 33, 43, 53) und das Werkstück (1, 11, 21, 31, 41, 55) bei der laserbasierten Bearbeitung derart relativ zueinander bewegt werden, dass ein Abschnitt des Werkstücks (1, 11, 21, 31, 41, 55) abgetragen wird, wobei die zu erzeugende Werkstück-Oberfläche (7', 37) an der Grenzfläche zu dem abgetragenen Abschnitt entsteht.

3. Verfahren nach Anspruch 1 oder 2, **dadurch gekennzeichnet, dass** der Winkel α in Abhängigkeit von dem Material des Werkstücks (1, 11, 21, 31, 41, 55), der Wellenlänge des Lasers (52) und der mittleren Leistung des Lasers (52) bestimmt wird.

4. Verfahren nach Anspruch 1, 2 oder 3, **dadurch gekennzeichnet, dass** der Laser (52) gepulst ist.

5. Verfahren nach Anspruch 4, **dadurch gekennzeichnet, dass** der Winkel α in Abhängigkeit von der Pulsdauer und von der Pulsenergie vorgegeben wird.

6. Verfahren nach einem der vorhergehenden Ansprüche, **dadurch gekennzeichnet, dass** der Laserstrahl (3, 13, 23, 33, 43, 53) auf das Werkstück (1, 11, 21, 31, 41, 55) fokussiert wird, wobei der Brennpunkt des fokussierten Laserstrahls (3', 13, 23, 33, 43, 55) jeweils in dem Punkt liegt, in dem die Strahlachse (5', 15, 25, 35, 45) die zu erzeugende Werkstück-Oberfläche (7', 37) schneidet.

7. Verfahren nach einem der vorhergehenden Ansprüche, **dadurch gekennzeichnet, dass** die zu erzeugende Werkstück-Oberfläche (7') eine ebene Oberfläche ist.

8. Verfahren nach einem der Ansprüche 1 bis 6, **dadurch gekennzeichnet, dass** die zu erzeugende Werkstück-Oberfläche (37) eine gekrümmte Oberfläche ist, und dass die Bewegungseinrichtung das in der Werkstück-Fixiereinrichtung aufgenommene Werkstück (31) während des laserbasierten Materialabtrags um eine Werkstück-Rotationsachse dreht.

9. Verfahren nach einem der vorhergehenden Ansprüche, **dadurch gekennzeichnet, dass** das Abtragen von Material an dem Werkstück (1, 11, 21, 31, 41, 55) unter der Ausrichtung des Laserstrahls (3', 13, 23, 33, 43, 53) relativ zu dem Werkstück (1, 11, 21, 31, 41, 55) mit einem konstanten Winkel α erfolgt.

10. Verfahren nach einem der Ansprüche 1 bis 8, **dadurch gekennzeichnet, dass** der Winkel α beim Abtragen von Material an dem Werkstück (1, 11, 21, 31, 41, 55) innerhalb des Winkelbereichs 1° ≤ α ≤ 10° verändert wird.

11. Verfahren nach einem der vorhergehenden Ansprüche, **dadurch gekennzeichnet, dass** der Laserstrahl (3', 13, 23, 33, 43, 53) relativ zu der Oberfläche des Werkstücks (1, 11, 21, 31, 41, 55) bewegt wird, wobei der Winkel α zwischen der Strahlachse und der Tangente an die zu erzeugende Werkstück-Oberfläche während der Relativ-Bewegung innerhalb des Winkelbereichs 1°≤ α ≤ 10° liegt, und dass die Relativ-Bewegung eine Überlagerung aus einer ersten Bewegung und einer zweiten Bewegung darstellt, wobei der Laserstrahl (3', 13, 23, 33, 43, 53) bei der ersten Bewegung zwischen einem ersten Punkt A an der Oberfläche des Werkstücks (1, 11, 21, 31, 41, 55) und einem zweiten Punkt B an der Oberfläche des Werkstücks (1, 11, 21, 31, 41, 55) bewegt wird, und wobei der Laserstrahl (3', 13, 23, 33, 43, 53) bei der zweiten Bewegung innerhalb einer geschlossenen oder offenen Kurve bewegt wird, wobei die Ausdehnung der Kurve klein ist gegenüber dem Weg, den der Laserstrahl (3', 13, 23, 33, 43, 53) von Punkt A nach Punkt B zurücklegt.

## Claims

1. Method for laser machining a workpiece, wherein a predetermined workpiece surface (7', 37) is produced on the workpiece (1, 11, 21, 31, 41, 55) by removing material through a laser (52) of a laser machining device (50) which comprises
a workpiece fixing device (54) which receives and fixes the workpiece (1, 11, 21, 31, 41, 55),
a moving device (51) which moves the workpiece fixing device (54) relative to a device base (56) including the laser (52), whose laser beam (3', 13, 23, 33, 43, 53) with its geometric beam axis (5', 15, 25, 35, 45), is directed onto the workpiece (1, 11, 21, 31, 41, 55) received in the workpiece fixing device (54),
wherein the laser machining device (50) is configured to align the workpiece (1, 11, 21, 31, 41, 55) arranged in the workpiece fixing device (54) relative to the laser beam (3', 13, 23, 33, 43, 53) and to move the laser beam (3', 13, 23, 33, 43, 53) relative to the workpiece (1, 11, 21, 31, 41, 55),
**characterized by** the following steps:
aligning the workpiece (1, 11, 21, 31, 41, 55) and the laser beam (3', 13, 23, 33, 43, 53) of the laser (52) relative to one another during the machining so that the beam axis (5', 15, 25, 35, 45) of the laser beam (3', 13, 23, 33, 43, 53 ) encloses an angle α between 1° and 10° with a tangent (17, 27, 38, 48) to the workpiece surface (7', 37) to be produced in a respective point where the beam axis (5', 15, 25, 35, 45) intersects the workpiece surface (7', 37) to be produced; and
removing material from the workpiece (1, 11, 21, 31, 41, 55) through the laser beam (3', 13, 23, 33, 43, 53 ) aligned relative to the workpiece (1, 11, 21, 31, 41, 55) at the angle α, where 1° ≤ α ≤ 10°, wherein a flame (8') is generated when the laser beam (3', 13, 23, 33, 43, 53) strikes the workpiece (1, 11, 21, 31, 41, 55), wherein the flame (8') contains sublimated material of the workpiece (1, 11, 21, 31, 41, 55) resulted from irradiation by the laser beam (3', 13, 23, 33, 43, 53 ), wherein the flame (8') has an opening angle γ that depends on the material of the workpiece (1, 11, 21, 31, 41, 55) and of the laser beam (3', 13, 23, 33, 43, 53), and that the angle α is adjusted so that it is equal to the opening angle γ.

2. Method according to claim 1, **characterized in that** the laser beam (3', 13, 23, 33, 43, 53) and the workpiece (1, 11, 21, 31, 41, 55) are moved relative to one another during the laser machining, so that a portion of the workpiece (1, 11, 21, 31, 41, 55) is removed, wherein the workpiece surface (7', 37) to be produced is formed at the interface with the removed portion.

3. Method according to claim 1 or 2, **characterized in that** the angle α is determined as a function of the material of the workpiece (1, 11, 21, 31, 41, 55), the wavelength of the laser (52), and the average power of the laser (52).

4. Method according to claim 1, 2 or 3, **characterized in that** the laser (52) is pulsed.

5. Method according to claim 4, **characterized in that** the angle α is determined as a function of a pulse duration and a pulse energy of the laser.

6. Method according to one of the preceding claims **characterized in that** the laser beam (3, 13, 23, 33, 43, 53) is focused on the workpiece (1, 11, 21, 31, 41, 55), wherein the focal point of the focused laser beam (3, 13, 23, 33, 43, 53) is located at the point where the beam axis (5', 15, 25, 35, 45) intersects the workpiece surface (7', 37) to be produced.

7. Method according to one of the preceding claims **characterized in that** the workpiece surface (7') to be produced is a flat surface.

8. Method according to one of claims 1 to 6, **characterized in that** the workpiece surface (37) to be produced is a cambered surface and the moving device rotates the workpiece (31) received in the workpiece fixing device about a workpiece axis of rotation during the material removal through the laser.

9. Method according to one of the preceding claims, **characterized in that** the removal of material from the workpiece (1, 11, 21, 31, 41, 55) is performed through the laser beam (3', 13, 23, 33, 43, 53) aligned relative to the workpiece (1, 11, 21, 31, 41, 55) with the angle α held constant.

10. Method according to one of claims 1 to 8, **characterized in that** the angle α is varied within an angular range of 1° ≤ α ≤ 10° during the removal of material from the workpiece (1, 11, 21, 31, 41, 55).

11. Method according to one of the preceding claims, **characterized in that** the laser beam (3', 13, 23, 33, 43, 53) is moved relative to the surface of the workpiece (1, 11, 21, 31, 41, 55), wherein the angle α between the beam axis and the tangent to the workpiece surface to be produced is within the angular range of 1° ≤ α ≤ 10° during the relative movement, and wherein the relative movement is a superposition of a first movement and a second movement, wherein the laser beam (3', 13, 23, 33, 43, 53) is moved between a first point A on the surface of the workpiece (1, 11, 21, 31, 41, 55) and a second point B on the surface of the workpiece (1, 11, 21, 31, 41, 55), during the first movement, and wherein the laser beam (3', 13, 23, 33, 43, 53) is moved within a closed or open curve during the second movement, whereby the extent of the curve is small compared to a distance covered by the laser beam (3', 13, 23, 33, 43, 53) between the first point A and the second point B.

## Revendications

1. Procédé permettant l'usinage au laser d'une pièce, dans lequel une surface de pièce (7', 37) définie est produite sur la pièce (1, 11, 21, 31, 41, 55) par enlèvement de matière au moyen d'un laser (52), en utilisant un dispositif d'usinage au laser (50) qui comprend un appareil de fixation de pièce (54) recevant et fixant la pièce (1, 11, 21, 31, 41, 55), un appareil de déplacement (51) qui déplace l'appareil de fixation de pièce (54) par rapport à une base de dispositif (56) et présente le laser (52) dont le faisceau laser (3', 13, 23, 33, 43, 53) est dirigé avec son axe de faisceau (5', 15, 25, 35, 45) géométrique sur la pièce (1, 11, 21, 31, 41, 55) reçue dans l'appareil de fixation de pièce (54), dans lequel le dispositif d'usinage au laser (50) est réalisé pour orienter la pièce (1, 11, 21, 31, 41, 55) disposée dans l'appareil de fixation de pièce (54) par rapport au faisceau laser (3', 13, 23, 33, 43, 53) et pour déplacer le faisceau laser (3', 13, 23, 33, 43, 53) par rapport à la pièce (1, 11, 21, 31, 41, 55), **caractérisé par** les étapes de procédé suivantes:
alignement de la pièce (1, 11, 21, 31, 41, 55) et du faisceau laser (3', 13, 23, 33, 43, 53) du laser (52) l'un par rapport à l'autre, de telle sorte que l'axe de faisceau (5', 15, 25, 35, 45) du faisceau laser (3', 13, 23, 33, 43, 53) est orienté, pendant l'usinage, respectivement au point auquel l'axe de faisceau (5', 15, 25, 35, 45) coupe la surface de pièce (7', 37) à produire, forme avec une tangente (17, 27, 38, 48) à la surface de pièce (7', 37) à produire en ce point un angle α compris entre 1° et 10°, et
enlèvement de matière sur la pièce (1, 11, 21, 31, 41, 55) avec l'orientation du faisceau laser (3', 13, 23, 33, 43, 53) par rapport à la pièce (1, 11, 21, 31, 41, 55) selon l'angle α, dans lequel 1° ≤ α ≤ 10°, dans lequel, lors de l'impact du faisceau laser (3', 13, 23, 33, 43, 53) sur la pièce (1, 11, 21, 31, 41, 55), une flamme (8') est produite, laquelle contient du matériau de la pièce (1, 11, 21, 31, 41, 55) sublimé par l'action du faisceau laser (3', 13, 23, 33, 43, 53), dans lequel la flamme (8') présente un angle d'ouverture y dépendant du matériau de la pièce (1, 11, 21, 31, 41, 55) et de l'angle d'ouverture dépandent du faisceau laser (3', 13, 23, 33, 43, 53), et en ce que l'angle α est réglé de sorte qu'il est aussi grand que l'angle d'ouverture γ.

2. Procédé selon la revendication 1, **caractérisé en ce que** le faisceau laser (3', 13, 23, 33, 43, 53) et la pièce (1, 11, 21, 31, 41, 55) sont déplacés l'un par rapport à l'autre lors de l'usinage au laser de telle sorte qu'une section de la pièce (1, 11, 21, 31, 41, 55) est enlevée, dans lequel la surface de pièce (7', 37) à produire est formée à l'interface avec la section enlevée.

3. Procédé selon la revendication 1 ou 2, **caractérisé en ce que** l'angle α est déterminé en fonction du matériau de la pièce (1, 11, 21, 31, 41, 55), de la longueur d'onde du laser (52) et de la puissance moyenne du laser (52).

4. Procédé selon la revendication 1, 2 ou 3, **caractérisé en ce que** le laser (52) est pulsé.

5. Procédé selon la revendication 4, **caractérisé en ce que** l'angle α est prédéfini en fonction de la durée d'impulsion et de l'énergie d'impulsion.

6. Procédé selon l'une des revendications précédentes, **caractérisé en ce que** le faisceau laser (3, 13, 23, 33, 43, 53) est focalisé sur la pièce (1, 11, 21, 31, 41, 55), dans lequel le point focal du faisceau laser (3', 13, 23, 33, 43, 55) focalisé se trouve respectivement au point auquel l'axe de faisceau (5', 15, 25, 35, 45) coupe la surface de pièce (7', 37) à produire.

7. Procédé selon l'une des revendications précédentes, **caractérisé en ce que** la surface de pièce (7') à produire est une surface plane.

8. Procédé selon l'une des revendications 1 à 6, **caractérisé en ce que** la surface de pièce (37) à produire est une surface courbe, et **en ce que** l'appareil de déplacement fait tourner la pièce (31) reçue dans l'appareil de fixation de pièce autour d'un axe de rotation de pièce pendant l'enlèvement de matière au laser.

9. Procédé selon l'une des revendications précédentes, **caractérisé en ce que** l'enlèvement de matière sur la pièce (1, 11, 21, 31, 41, 55) est réalisé en orientant le faisceau laser (3', 13, 23, 33, 43, 53) par rapport à la pièce (1, 11, 21, 31, 41, 55) selon un angle α constant.

10. Procédé selon l'une des revendications 1 à 8, **caractérisé en ce que** l'angle α est modifié lors de l'enlèvement de matière sur la pièce (1, 11, 21, 31, 41, 55) dans la plage angulaire 1° ≤ α ≤ 10°.

11. Procédé selon l'une des revendications précédentes, **caractérisé en ce que** le faisceau laser (3', 13, 23, 33, 43, 53) est déplacé par rapport à la surface de la pièce (1, 11, 21, 31, 41, 55), dans lequel l'angle α entre l'axe de faisceau et la tangente à la surface de pièce à produire pendant le mouvement relatif est compris dans la plage angulaire 1° ≤ α ≤ 10°, et **en ce que** le mouvement relatif représente une superposition d'un premier mouvement et d'un second mouvement, dans lequel le faisceau laser (3', 13, 23, 33, 43, 53) est déplacé lors du premier mouvement entre un premier point A à la surface de la pièce (1, 11, 21, 31, 41, 55) et un second point B à la surface de la pièce (1, 11, 21, 31, 41, 55), et dans lequel le faisceau laser (3', 13, 23, 33, 43, 53) est déplacé lors du second mouvement à l'intérieur d'une courbe fermée ou ouverte, dans lequel l'étendue de la courbe est petite par rapport à la distance que le faisceau laser (3', 13, 23, 33, 43, 53) parcourt du point A au point B.
